# EUROPEAN PATENT SPECIFICATION

(11) **EP 4 345 979 B1**
(45) Date of publication and mention of the grant of the patent: **28.01.2026**
(21) Application number: 23197854.5
(22) Date of filing: 18.09.2023
(51) Int. Cl.: H01M 10/48, H01M 50/209, H01M 50/342, H01M 10/42

(54) **BATTERY CELL, BATTERY MODULE, BATTERY PACK, ENERGY STORAGE SYSTEM, AND ELECTRIC VEHICLE**
BATTERIEZELLE, BATTERIEMODUL, BATTERIEPACK, ENERGIESPEICHERSYSTEM UND ELEKTROFAHRZEUG
ÉLÉMENT DE BATTERIE, MODULE DE BATTERIE, BLOC-BATTERIE, SYSTÈME DE STOCKAGE D'ÉNERGIE ET VÉHICULE ÉLECTRIQUE

(30) Priority: 22.09.2022 CN 202211155929
(43) Date of publication of application: 03.04.2024
(73) Proprietor: Huawei Digital Power Technologies Co., Ltd., Shenzhen, 518043 (CN)
(72) Inventor: LE, Haonan, Shenzhen, 518043 (CN); ZHU, Jing, Shenzhen, 518043 (CN); ZHANG, Bao, Shenzhen, 518043 (CN); HOU, Tianhong, Shenzhen, 518043 (CN); LU, Junliang, Shenzhen, 518043 (CN)
(74) Representative: Epping - Hermann - Fischer

(56) References cited:
- EP-A1- 3 923 397
- CN-A- 111 584 792
- CN-A- 113 471 555
- DE-A1- 102020 113 597
- JP-A- 2014 192 104
- US-A1- 2018 316 067

## Description

### TECHNICAL FIELD

This application relates to the field of energy storage technologies, and in particular, to a battery cell, a battery module, a battery pack, an energy storage system, and an electric vehicle.

### BACKGROUND

A battery management system (battery management system, BMS) of a battery module may perform health monitoring on each battery cell in the battery module. As accuracy and reliability of BMS monitoring depend on various sensors, research and analysis of sensor technologies is especially necessary. A stress sensor may quickly implement pressure monitoring and abnormality diagnosis of a battery. It is very important to monitor thermal runaway or valve opening characteristics of an electrochemical cell during operation of the battery.

However, currently stress deformation of a battery cell can be monitored only in a laboratory or in a manufacturing process, and stress deformation of a battery in operation cannot be monitored.

In view of this, how to monitor the stress deformation of the battery in operation is an urgent problem to be resolved currently.

DE102020113597A1 provides a device which comprises a housing of an electrochemical energy storage device. The device further comprises a sensor device integrated into the closure lid. The sensor device comprises a sensor housing and a sensor chip arranged in the sensor housing, which is designed to detect a pressure within the housing of the energy storage device.

EP3923397A1 provides a vehicle battery fire sensing apparatus, the sensors configured to measure the pressure of the battery is provided outside a battery pack case.

CN113471555A provides a battery cell which comprises a pressure detecting device for detecting the pressure in the shell. The pressure detecting device is set on the inner side of the cover plate, and the pressure detecting device is configured to detect the pressure in the shell.

### SUMMARY

This application provides a battery cell, a battery module, a battery pack, an energy storage system, and an electric vehicle, to implement monitoring of stress deformation of a battery in operation. The invention is set out in the appended claims.

According to a first aspect, a battery cell is provided. The battery cell 11 includes a housing 112, an electrode component 113 located in the housing 112, a top cover component 114 located on the housing 112, and an explosion-proof valve 111 located on the top cover component 114. The battery cell 11 further includes one or more stress sensors 116, the stress sensors 116 are located on the explosion-proof valve 111 and face outside the housing 112, or the stress sensors 116 are located on the explosion-proof valve 111 and face inside the housing 112, and the stress sensors 116 are connected to a processor of a battery module 1. Each stress sensor 116 is configured to detect stress that is inside the battery cell 11 and that acts on a corresponding position on the explosion-proof valve 111, and the one or more stress sensors 116 are configured to transmit all obtained electrical signals to the processor.

In this aspect, the one or more stress sensors may monitor stress of a battery cell in operation in real time by disposing the one or more stress sensors on the explosion-proof valve facing outside the housing, or on the explosion-proof valve facing inside the housing, thereby improving timeliness of stress monitoring.

The detecting does not require large-scale test equipment and the detecting method is easy to use.

A surface of the explosion-proof valve 111 is divided into a first area and a second area. Thickness of an edge of the first area is consistent with thickness of the body of the explosion-proof valve 111, and thickness of an edge of the second area is less than the thickness of the body of the explosion-proof valve 111. The stress sensor 116 is located in the second area.

In this implementation, the stress sensor is disposed in the second area that may be opened on the explosion-proof valve, so that stress deformation in the battery cell may be monitored in time, and opening of the explosion-proof valve may be detected in time.

An electrical signal corresponding to the stress sensor 116 includes at least one piece of the following information: position information of the stress sensor 116 on the explosion-proof valve 111, a stress magnitude, at the corresponding position, that is detected by the stress sensor 116, and a stress change rate at the corresponding position detected by the stress sensor 116.

In this implementation, the stress sensor reports the position information of the stress sensor, the detected stress magnitude at the corresponding position, and the detected stress change rate at the corresponding position, so that the processor may accurately locate a target position and a fault status.

The battery cell 11 includes a plurality of stress sensors 116, and the plurality of stress sensors 116 are located at at least some element positions of a plurality of element positions distributed in a matrix on the explosion-proof valve 111.

In this implementation, the plurality of stress sensors are located at at least some element positions of the plurality of element positions distributed in a matrix on the explosion-proof valve, so that stress deformation at one or more element positions may be accurately detected. When the plurality of stress sensors are distributed in a matrix, the stress sensor at each element position may be mutually verified, thereby improving accuracy of detection. In addition, a stress sensor at a single element position may be prevented from being faulty and needing to be replaced. Even if a stress sensor at one or a few element positions is faulty, stress monitoring may still be performed on the entire stress sensor matrix.

One row and one column of the matrix correspond to one element position.

For example, the stress sensor may be positioned directly corresponding to one element position, or the stress sensor may be located between two element positions.

With reference to the first aspect, in a possible implementation, when the stress sensor 116 is located on the explosion-proof valve 111 and faces outside the housing 112, the explosion-proof valve 111 is covered with a protection component, and the stress sensor 116 is disposed between the explosion-proof valve 111 and the protection component, or the stress sensor 116 is disposed on an outer surface of the protection component.

In this implementation, the stress sensor is disposed between the explosion-proof valve and the protection component, which is conducive to protecting the stress sensor and may further prevent dust. Alternatively, the stress sensor is disposed on the outer surface of the protection component of the explosion-proof valve, which is convenient.

With reference to the first aspect, in another possible implementation, the stress sensor 116 is fastened to the explosion-proof valve 111 in at least one of the following manners: bonding and welding.

In this implementation, the stress sensor may be conveniently and reliably fastened to the explosion-proof valve by bonding the stress sensor to the explosion-proof valve by using, for example, hot-press adhesive, or welding the stress sensor to the explosion-proof valve. The sensor is easy to disassemble and maintain, and has little impact on the performance of the electrode component in the battery cell.

With reference to the first aspect or any implementation of the first aspect, in yet another possible implementation, the at least some element positions are distributed in a centralized manner, a plurality of electrical signals generated by the plurality of stress sensors 116 are aggregated to a stress sensor 116 located at a central element position, and the plurality of electrical signals are processed by a stress sensor 116 receiving aggregated signals into one electrical signal and then transmitted to the processor.

In this implementation, by using the sensor matrix in this layout form, the stress sensor located at the central element position aggregates electrical signals corresponding to the plurality of stress sensors and then transmits the electrical signals to the processor, so that a transmission line may be simplified.

With reference to the first aspect or any implementation of the first aspect, in still yet another possible implementation, the at least some element positions are distributed in a distributed manner, a plurality of electrical signals generated by the plurality of the stress sensors 116 are aggregated to one of the stress sensors 116, and the plurality of electrical signals are transmitted to the processor by a stress sensor 116 receiving aggregated signals.

In this implementation, by using the sensor matrix in this layout form, conducting wires that connect sensors may be saved, and stress deformation at one or more positions may be accurately detected.

With reference to the first aspect or any implementation of the first aspect, in a further possible implementation, the stress sensor 116 is coated by a protective film.

In this implementation, the stress sensor is coated by the protective film, so that the stress sensor may be prevented from being damaged, contaminated, or the like.

According to a second aspect, a battery module is provided. The battery module 1 includes a battery management system and a plurality of battery cells 11 according to the first aspect or any implementation of the first aspect, and the plurality of battery cells 11 are connected in series/parallel. The battery management system is configured to receive an electrical signal detected by each of one or more stress sensors 116 in each of the plurality of battery cells 11. The battery management system is further configured to determine a faulty target battery cell 11 based on one or more electrical signals.

In this aspect, the battery management system, by receiving one or more electrical signals sent by one or more stress sensors located on the explosion-proof valve, may accurately determine a faulty target battery cell based on the one or more electrical signals, so that stress of a battery cell in operation may be monitored in real time, thereby improving timeliness of stress monitoring.

With reference to the second aspect, in a possible implementation, the battery management system is further configured to control a fire extinguishing apparatus to extinguish a fire on the target battery cell 11 when open fire information of the target battery cell 11 is detected.

In this implementation, when the target battery cell is on fire due to thermal runaway, the battery management system may further control the fire extinguishing apparatus to extinguish the fire on the target battery cell in a timely manner to avoid damage to the entire battery module or a battery pack, thereby avoiding a greater loss.

With reference to the second aspect or any implementation of the second aspect, in another possible implementation, each battery cell 11 includes a plurality of stress sensors 116, and the battery management system is configured to receive a plurality of aggregated electrical signals sent by one of the plurality of stress sensors 116.

In this implementation, one of the sensors transmits one or more aggregated electrical signals to the processor in a unified manner, so that a transmission line between the sensor and the processor may be simplified.

With reference to the second aspect or any implementation of the second aspect, in still another possible implementation, the battery management system stores at least one piece of the following information: a preset stress magnitude and a preset stress change rate at one or more positions on the explosion-proof valve 111. The battery management system is configured to determine the faulty target battery cell 11 based on a stress magnitude detected by each stress sensor 116 and a preset stress magnitude at a corresponding position, and/or a stress change rate detected by each stress sensor 116 and a preset stress change rate at a corresponding position.

In this implementation, after the battery cell is manufactured, an expansion force clamp for an electrochemical cell and the battery cell having stress deformation monitoring capability described in this application may be used to determine expansion force cycle data in a charge and discharge cycle at one or more rates, establish a battery stress simulation model, and determine a basic parameter of a battery stress structure. Therefore, after the battery cell is delivered from a factory, stress deformation may be detected based on the basic parameter of the battery stress structure, and the stress structure parameter may be periodically self-checked and adjusted.

According to a third aspect, a battery pack is provided. The battery pack includes a plurality of battery modules 1, each of the plurality of battery modules 1 includes a battery management system and a plurality of battery cells 11 according to the first aspect or any implementation of the first aspect, and the plurality of battery cells 11 are connected in series/parallel.

According to a fourth aspect, an energy storage system is provided, including a converter and at least one battery pack according to the third aspect. The converter is connected to the battery pack, and is configured to convert a current input to the battery pack or a current output from the battery pack.

According to a fifth aspect, an electric vehicle is provided, including a motor, wheels, and the energy storage system according to the fourth aspect that is electrically connected to the motor. The energy storage system is configured to provide electric energy for the motor.

With reference to the fifth aspect, in a possible implementation, the motor is further configured to brake the vehicle when a battery management system sends an alarm signal.

### BRIEF DESCRIPTION OF DRAWINGS

FIG. 1 is a schematic diagram of a structure of a battery module in a battery pack according to an embodiment of this application;
FIG. 2 is a main sectional view of a battery cell according to an embodiment of this application;
FIG. 3 is a top view of a battery cell according to an embodiment of this application;
FIG. 4 is a three-dimensional view of a battery cell having a stress monitoring function according to an embodiment of this application;
FIG. 5 is a schematic diagram of a structure of an electrical connection for performing stress monitoring on a plurality of battery cells in a battery module according to an embodiment of this application; and
FIG. 6 is a schematic diagram of a stress sensor matrix according to an embodiment of this application.

### Descriptions of reference numerals:

1: battery module; 11: battery cell; 111: explosion-proof valve; 112: housing of the battery cell 11; 113: electrode component in the battery cell 11; 114: top cover component of the battery cell 11; 115a: positive pole of the battery cell 11; 115b: negative pole of the battery cell 11; 116: stress sensor; 117: conducting wire; 118: sensor matrix.

### DESCRIPTION OF EMBODIMENTS

The following describes embodiments of this application with reference to the accompanying drawings in embodiments of this application.

In recent years, with the improvement of people's living standards and environmental protection awareness, people have realized that energy is an issue worthy of great attention. For energy and environment considerations, electric vehicles have been developed rapidly thanks to the efforts of governments and car makers. Pure electric vehicles have become an important development direction for electric vehicles with
their real "zero emission". A lithium-ion battery has, thanks to its excellent performance, become an ideal power source for a new generation of electric vehicles. The lithium-ion battery features light weight, large energy storage, large power, no pollution, no secondary pollution, long service life, small self-discharge coefficient, and wide temperature adaptability, and is an ideal battery for electric bicycles, electric motorcycles, electric cars, electric trucks, and the like. In addition to lithium-ion batteries, lead-acid batteries, sodium batteries, magnesium batteries, aluminum batteries, potassium batteries, nickel-cadmium batteries, nickel-metal hydride batteries, and the like are also widely used as environmentally friendly energy storage batteries.

Battery application scenarios can be divided into three categories: consumption, power, and energy storage. In the three application scenarios, the field of battery energy storage has also received close attention, and energy storage batteries are gradually gaining attention as an emerging application scenario. Mainstream energy storage batteries such as lithium-ion batteries have a broad prospect in application of large-scale energy storage systems thanks to features such as high energy density, high conversion efficiency, and fast reaction. In the future, lithium-ion battery technologies will be widely used in a new generation power system. As a core of new energy electric vehicles and energy storage systems, a battery is directly related to a service life, driving mileage, vehicle economy, and safety. A mainstream lithium-ion battery is used as an example. As a chemical energy storage component, the lithium-ion battery features a positive electrode made of a lithium-containing compound, and a negative electrode made of lithium-intercalated graphite, both of which are immersed in lithium-containing organic solvent. In a storage and use process, side reactions continuously occur between the positive electrode and electrolyte, and between the negative electrode and the electrolyte, to generate gas, where the side reactions are relative to normal reactions between the positive electrode and the electrolyte, and between the negative electrode and the electrolyte that are required for working of the battery. In addition, each component of the lithium-ion battery is prone to react with water and deteriorate, so inside the lithium-ion battery is a sealed cavity isolated from water. Therefore, with continuous accumulation of gas inside the lithium-ion battery, an internal interface of the lithium-ion battery and a cavity that accommodates a lithium-ion electrode deform, and may finally cause the cavity of the lithium-ion battery to crack. To alleviate a problem caused by the deformation of the cavity of the lithium-ion battery, a pressure relief opening may be disposed on a surface of the lithium-ion battery, which is collectively referred to as an explosion-proof valve or a pressure relief valve in the industry. When internal pressure of the lithium-ion battery reaches a threshold, the explosion-proof valve is started, and a crack is created on a surface of the cavity to release gas in the cavity, so that a risk of cracking the cavity of the lithium-ion battery is reduced.

An action of opening the explosion-proof valve generally occurs at the end of the service life of the lithium-ion battery or when an abnormal reaction occurs inside the battery. After the explosion-proof valve is opened, the electrolyte of the lithium-ion battery reacts with water in an external environment. A process of electrolyte deterioration is also accompanied by heat generation. Therefore, after the explosion-proof valve is opened, the lithium-ion battery has potential safety hazards, and the action of opening the explosion-proof valve of the lithium-ion battery needs to be monitored.

In addition, a defect in a manufacturing process and overcharge, overdischarge, high-rate charge, and the like in a use process of the battery may cause lithium dendrites or copper dendrites, which may puncture a separator of the battery and cause an internal short-circuit of the battery (a positive electrode plate contacts a negative electrode plate), thereby causing thermal runaway. If a collision accident occurs in the electric vehicle, the battery may be mechanically deformed, which may cause an internal short-circuit and cause a battery fire and explosion. Therefore, timely detection of the internal short-circuit and safe treatment of the battery to avoid the battery fire and explosion, is of important practical significance for the use of the lithium-ion battery.

However, in current solutions, stress deformation of a battery cell can be monitored only in a laboratory or in a manufacturing process, and stress deformation of a battery in operation cannot be monitored.

For example, an experimental method for in-situ measurement of an internal pressure of a battery is to control, by using a control apparatus, a trigger apparatus to heat or charge the battery, so as to trigger a battery thermal runaway. The control apparatus controls a detection apparatus to collect a first pressure value of the battery cavity and a second pressure value of an airtight cavity at a specified time. The control apparatus controls, based on the first pressure value and the second pressure value, an inflation and deflation apparatus to inflate or deflate the airtight cavity, so that the second pressure value of the airtight cavity is equal to the first pressure value of the battery cavity. Because the internal and external pressures of the battery are balanced, a housing of the battery is in situ (the housing is not deformed). In the experimental method for in-situ measurement of the internal pressure of the battery, the first pressure value measured by using the detection apparatus is an in-situ pressure value of the battery. However, such a detection method requires corresponding large-scale test equipment, and the detection method is relatively complex. The detection can be performed only in a laboratory and a manufacturing process, and cannot monitor a battery in operation.

For another example, a battery for preventing a valve opening failure includes: a battery body, where a battery explosion-proof valve is disposed on the battery body; a vacuum compartment, disposed inside the battery body; and a vacuum compartment opening valve, disposed between the vacuum compartment and internal space of the battery body, where opening pressure of the vacuum compartment opening valve is less than opening pressure of the battery explosion-proof valve. By using this solution, it may be detected that the battery explosion-proof valve is about to open before the battery explosion-proof valve is opened, to prevent a failure caused by opening the battery explosion-proof valve. However, the vacuum compartment in the battery body occupies an excessively large position, which affects placement of a roll core of a square battery. In addition, safety and energy density of an electrochemical cell are greatly affected.

For still another example, in a solution for determining a valve opening pressure value of an explosion-proof valve in a battery pack, the battery pack in the solution includes an explosion-proof valve, a heat insulation component, and a plurality of electrochemical cells. The method includes: performing a simulated working condition test on the battery pack, to obtain a first pressure value collected for the plurality of electrochemical cells in a process of the simulated working condition test; determining a second pressure value for the plurality of electrochemical cells based on pressure bearing performance of the heat insulation component; and determining an opening pressure value of the explosion-proof valve based on the first pressure value and the second pressure value, where the opening pressure value is used to control the explosion-proof valve to open when a pressure value of the battery pack reaches the opening pressure value. This solution realizes a design of the opening pressure value of the explosion-proof valve from a perspective of preventing heat diffusion of the battery pack by combining the pressure bearing performance of a heat insulation pad. However, the technology is used to determine the opening pressure value of the explosion-proof valve during a design process of the battery pack, and cannot monitor a battery in operation.

It can be learned that an application scenario of the foregoing solution is mainly applicable to detection in a laboratory and a manufacturing process, and cannot monitor a battery in operation. There are problems such as high costs and excessively large impact on the electrochemical cells.

For the foregoing proposed monitoring of stress deformation of the battery cell only in the laboratory or in the manufacturing process, but not for the battery in operation, embodiments of this application provide a battery cell, a battery module, a battery pack, an energy storage system, and an electric vehicle. One or more stress sensors are disposed on an explosion-proof valve or a housing of the battery cell, so that the one or more stress sensors may monitor stress of the battery cell in operation in real time, thereby improving timeliness of stress monitoring.

The following describes implementations of this application by using specific embodiments. A person skilled in the art may easily learn of other advantages and effects of this application based on content disclosed in this specification. Although this application is described with reference to an example embodiment, it does not mean that a characteristic of this application is limited only to this implementation. On the contrary, a purpose of describing this application with reference to an implementation is to cover another option or modification that may be derived based on claims of this application. To provide an in-depth understanding of this application, the following descriptions include a plurality of specific details. This application may be alternatively implemented without using these details. In addition, to avoid confusion or blurring a focus of this application, some specific details are omitted from the descriptions. It should be noted that embodiments in this application and features in embodiments may be mutually combined when there is no conflict.

The following terms "first", "second", and the like are merely used for description, and shall not be understood as an indication or implication of relative importance or implicit indication of a quantity of indicated technical features. Therefore, a feature limited by "first", "second", or the like may explicitly or implicitly include one or more features. In description of this application, unless otherwise stated, "a plurality of" means two or more than two. Orientation terms such as "up", "down", "left", and "right" are defined relative to an orientation of schematic placement of components in the accompanying drawings. It should be understood that these directional terms are relative concepts and are used for relative description and clarification. These directional terms may vary accordingly depending on an orientation in which the components are placed in the accompanying drawings.

In this application, that a structure is roughly in a specific shape means that the structure is generally in the specific shape from a macro perspective, and may be partially adjusted. For example, if the structure is roughly square in shape, it may be understood that a shape in which one side is an arc rather than a straight line is also included in the range. One feature is roughly coaxial with another feature may be understood that a distance between axes of the two features does not exceed 20% of a size of any feature perpendicular to the axes.

In this application, unless otherwise explicitly specified and limited, a term "connection" should be understood in a broad sense. For example, the "connection" may be a fastened connection, a detachable connection, or an integrated connection; and may be a direct connection or an indirect connection by using an intermediate medium. The term "and/or" used in this specification includes any and all combinations of one or more related listed items.

When the following embodiments are described in detail with reference to schematic diagrams, for ease of description, a diagram indicating a partial structure of a component is partially enlarged not based on a general scale. In addition, the schematic diagrams are merely examples, and should not limit the protection scope of this application herein.

To make the objectives, technical solutions, and advantages of this application clearer, the following further describes the implementations of this application in detail with reference to the accompanying drawings.

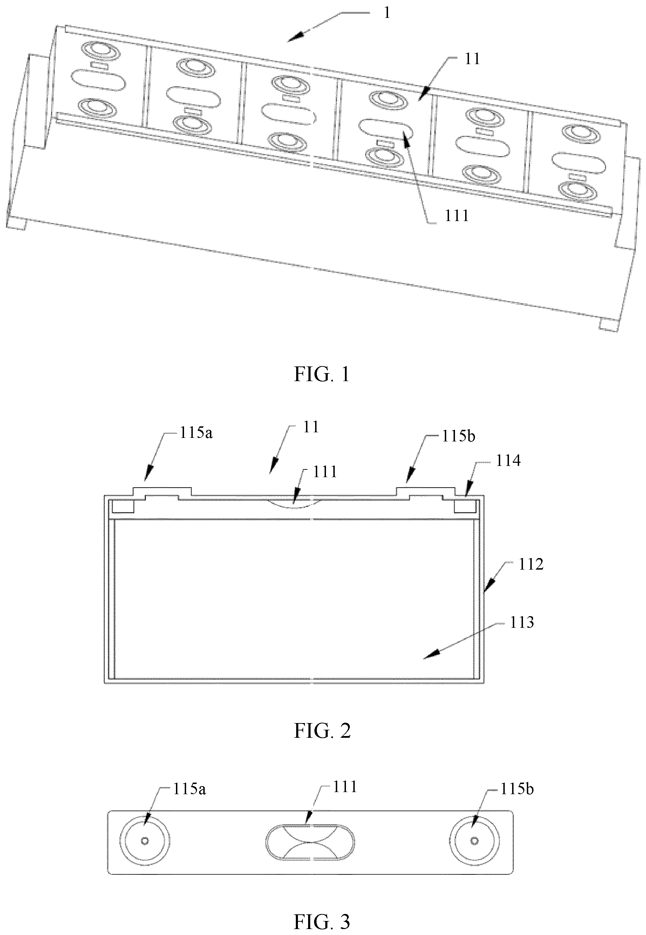

FIG. 1 is a schematic diagram of a structure of a battery module in a battery pack according to an embodiment of this application. The battery pack includes a plurality of battery modules. Each of the plurality of battery modules 1 includes a BMS (not shown in the figure) and a plurality of battery cells 11. The plurality of battery cells 11 may be connected in series/parallel. For example, the plurality of battery cells 11 may be connected in series, or the plurality of battery cells 11 may be connected in parallel, or the plurality of battery cells 11 may be first connected in series and then connected in parallel, or the plurality of battery cells 11 may be first connected in parallel and then connected in series.

A shape of the battery cell 11 in this embodiment includes but is not limited to a pouch, a hexahedron, a cylinder, a square, a special shape, or the like. For example, shapes of the plurality of battery cells 11 may be the same.

The battery cells 11 in the battery module 1 may be arranged in a stacked manner, for example, sequentially stacked. Further, side panels may be further placed on two sides of the battery cell 11, so that the battery cells 11 are arranged neatly, and mechanical strength of the modules in a stacking direction of the battery cells 11 is ensured. A bottom panel may be placed at the bottom of the battery cell 11, to support the battery cell 11. In addition, a battery module fixing apparatus may be further installed at the bottom of the battery cell 11, so that at least one battery module 1 is fastened on the bottom panel. A pre-tightening force is applied to an end panel of the battery module 1 to press a battery, and maintain a connection of the pre-tightening force to the side and bottom panels. A connection manner may be riveting, welding, or the like. A top cover on the uppermost part of the battery module 1 seals a module cable. An explosion-proof valve 111 is disposed on at least one battery cell 11. In a storage and use process of the battery cell 11, side reactions continuously occur between a positive electrode and electrolyte, and between a negative electrode and the electrolyte, to generate gas. Therefore, with continuous accumulation of gas inside the battery cell 11, when internal pressure of the battery cell 11 reaches a threshold, the explosion-proof valve 111 is started, and a crack is created on a surface of a cavity to release gas in the cavity, so that a risk of cracking the cavity of the battery is reduced.

In this embodiment, the foregoing battery cell 11 may be any one or more of a lithium-ion battery, a lead-acid battery, a sodium battery, a magnesium battery, an aluminum battery, a potassium battery, a nickel-cadmium battery, a nickel-metal hydride battery, and the like.

The BMS may also be referred to as a battery nanny or a battery manager. The BMS is configured to manage the battery module 1, prevent overcharge and overdischarge of the battery cell 11 in the battery module 1, prolong a service life of the battery cell 11, and monitor a status of the battery cell 11. The BMS manages and controls a battery by measuring battery parameters and temperature parameters, for example, by estimating a state of charge (state of charge, SOC) of the battery. The SOC refers to a ratio of a remaining capacity of a storage battery after the storage battery is used for a period of time or is not used for a long time to a capacity of the storage battery in a fully charged state. The ratio is usually expressed in percentage. A value of the ratio ranges from 0 to 1. When SOC is 0, the battery is fully discharged, and when SOC is 1, the battery is fully charged. Alternatively, the SOC may be replaced with a charge-discharge electric quantity state, and the charge-discharge electric quantity state is a state of charge and a capacity of the battery or the battery module in a charging process, or a depth of discharge and a capacity of the battery or the battery module in a discharging process.

FIG. 2 is a main sectional view of a battery cell according to an embodiment of this application. The battery cell 11 includes a housing 112, an electrode component 113, and a top cover component 114.

The housing 112 may be in a shape of a pouch, a hexahedron, a cylinder, a square, a special shape, or the like. The shape of the housing 112 is not limited in this application. In addition, shapes of housings 112 of battery cells 11 may be the same or different. The housing 112 has internal space for accommodating the electrode component 113 and the electrolyte. The housing 112 may be made of aluminum, aluminum alloy, plastic, or the like.

The electrode component 113 may be formed by winding a positive electrode plate, a negative electrode plate, and a separator in a spiral manner around a winding axis, where the separator is an insulator between the positive electrode plate and the negative electrode plate. The electrode component 113 reacts with the electrolyte and then outputs electric energy.

The foregoing positive electrode plate has a positive electrode tab, and the negative electrode plate has a negative electrode tab. A positive pole 115a and a negative pole 115b are disposed on the housing 112. The positive electrode tab on the positive electrode plate is connected to the positive pole 115a on the housing 112, and the negative electrode tab on the negative electrode plate is connected to the negative pole 115b on the housing 112.

The top cover component 114 covers an opening of the housing 112, and the explosion-proof valve 111 is disposed on the top cover component 114. In a storage and use process of the battery cell 11, side reactions continuously occur between the positive electrode and the electrolyte, and between the negative electrode and the electrolyte, to generate gas. Therefore, with continuous accumulation of gas inside the battery cell 11, when internal pressure of the battery cell 11 reaches a threshold, the explosion-proof valve 111 on the battery cell 11 is started, and a crack is created on a surface of a cavity to release gas in the cavity, so that a risk of cracking the cavity of the battery cell 11 is reduced. The explosion-proof valve 111 is disposed on the top cover component 114, and the explosion-proof valve may be welded, riveted, or connected to the top cover component 114 of the battery cell 11 in another connection manner. For example, the foregoing explosion-proof valve 111 may be in any shape, for example, may be in a shape of a circle, a square, or another irregular shape. The shape of the explosion-proof valve 111 is not limited in this embodiment. For example, shapes of explosion-proof valves 111 on the battery cells 11 may be the same or different.

Further, a surface of the explosion-proof valve 111 may be covered with a protection component. For example, the protection component may be a patch, and the patch is attached to the surface of the explosion-proof valve. The patch may be manufactured by using any one of the following materials: high-density polyethylene, low-density polyethylene, polyethylene terephthalate, polyethylene, polypropylene, ethylene-vinyl acetate, polycarbonate, polyimide, polyvinyl chloride, polystyrene, and the like. The patch may be any one of the foregoing materials, or may be polymerization of one or more of the foregoing materials. These materials feature dust prevention, light weight, and the like.

The surface of the explosion-proof valve 111 is divided into a first area and a second area. In a process of stamping the explosion-proof valve 111, thickness of an edge of the first area is consistent with thickness of a body of the explosion-proof valve 111, and thickness of an edge of the second area is less than the thickness of the body of the explosion-proof valve 111. When the internal pressure of the battery cell reaches the threshold, the second area is started to release the gas in the cavity of the battery, so that a risk of cracking the cavity of the battery is reduced. The first area may not be started.

FIG. 3 is a top view of a battery cell according to an embodiment of this application. The explosion-proof valve 111 is disposed on the top cover component 114, and the explosion-proof valve may be welded, riveted, or connected to the top cover component 114 of the battery cell 11 in another connection manner.

For example, the foregoing explosion-proof valve 111 may be in any shape, for example, may be in a shape of a circle, a square, or another irregular shape. The shape of the explosion-proof valve 111 is not limited in this embodiment. For example, shapes of explosion-proof valves 111 on the battery cells 11 may be the same or different.

The electrode component 113 may be packaged in the housing 112, and the battery cell 11 may be prepared through baking, liquid injection, still standing, formation, aging, sealing, and capacity testing.

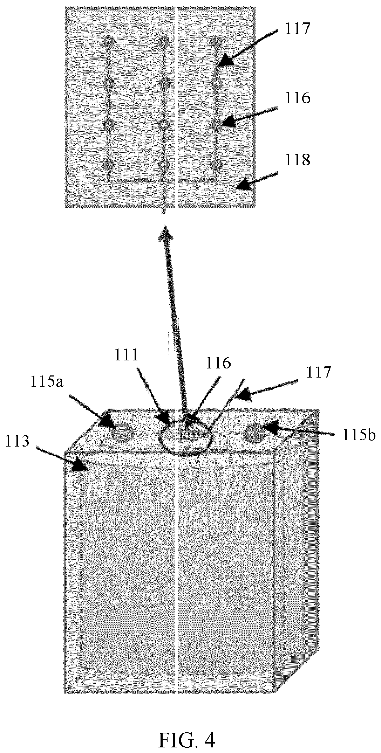

To monitor pressure and thermal runaway of a battery cell in operation, this embodiment provides a battery cell that may monitor stress deformation based on the battery cell shown in FIG. 1 and FIG. 2. When thermal runaway occurs on the battery cell 11, stress deformation near the explosion-proof valve 111 needs to be monitored, to monitor opening of the explosion-proof valve 111 in time. Therefore, as shown in FIG. 4, an embodiment of this application provides a three-dimensional view of a battery cell having a stress monitoring function. The battery cell 11 further includes one or more stress sensors 116 disposed on the top cover component 114. In one example, the one or more stress sensors 116 are located on the explosion-proof valve 111 and face outside of the housing 112. In another example, the one or more stress sensors 116 are located on the explosion-proof valve 111 and face inside the housing 112, and a transmission line of the stress sensor 116 and the stress sensor 116 itself may not affect performance of the electrode component 113 inside the battery cell. The one or more stress sensors 116 are connected to a processor of the battery module 1 through the transmission line. The transmission line and the stress sensor do not affect performance of the battery cell.

As shown above, the surface of the explosion-proof valve 111 is divided into the first area and the second area. The thickness of the edge of the first area is consistent with the thickness of the body of the explosion-proof valve 111, and the thickness of the edge of the second area is less than the thickness of the body of the explosion-proof valve 111. The stress sensor 116 is located in the second area. The stress sensor is disposed in the second area that may be opened on the explosion-proof valve, so that stress deformation in the battery cell may be monitored in time, and opening of the explosion-proof valve may be detected in time.

For example, when the stress sensor 116 is located on the explosion-proof valve 111 and faces outside the housing 112, the explosion-proof valve 111 is covered with the protection component, and the stress sensor 116 is disposed between the explosion-proof valve 111 and the protection component. The stress sensor 116 is disposed between the explosion-proof valve 111 and the protection component, which is conducive to protecting the stress sensor and may further prevent dust.

For example, when the stress sensor 116 is located on the explosion-proof valve 111 and faces outside the housing 112, the explosion-proof valve 111 is covered with the protection component, and the stress sensor 116 is disposed on an outer surface of the protection component. The stress sensor 116 is disposed on the outer surface of the protection component of the explosion-proof valve 111, so that the stress sensor 116 is conveniently disposed.

When an object deforms due to an external factor of a force, humidity, a temperature field change, or the like, internal forces that interact with each other are generated between parts of the object, to resist impact of the external factor, and attempt to restore the object from a position after deformation to a position before the deformation. An internal force on a unit area at a point of a section being examined is referred to as stress. The section being examined herein is a surface, of the explosion-proof valve, that faces the foregoing one or more stress sensors 116. For example, the internal force on the unit area at the point of the section being examined herein may be an internal force on one or more positions on the surface of the explosion-proof valve 111.

The processor of the battery module 1 may be a terminal neuron of the BMS in the battery module 1, or may be an independent processor.

Each stress sensor 116 is configured to detect stress that is inside the battery cell 11 and that acts on a corresponding position on the explosion-proof valve 111. The one or more stress sensors 116 are configured to transmit all obtained electrical signals to the processor.

The processor receives the foregoing one or more electrical signals. The foregoing one or more electrical signals include at least one piece of the following information: position information of the stress sensor 116 on the explosion-proof valve 111, a stress magnitude, at the corresponding position, that is detected by the stress sensor 116, and a stress change rate at the corresponding position detected by the stress sensor 116. The processor may determine a faulty target battery cell 11 based on the one or more electrical signals. Further, the processor may determine stress magnitudes at different positions in the target battery cell 11 based on position information of one or more stress sensors 116 in the one or more electrical signals. In addition, the processor may determine a specific fault status of the target battery cell based on stress magnitudes at one or more positions in the one or more electrical signals and stress change rates at the one or more positions. It can be learned that the stress sensor reports the position information of the stress sensor, the detected stress magnitude, and the detected stress change rate, so that the processor may accurately locate a target position and a fault status.

After the battery cell is manufactured, an expansion force clamp for an electrochemical cell and the battery cell having stress deformation monitoring capability described in this application may be used to determine expansion force cycle data in a charge and discharge cycle at one or more rates, establish a battery stress simulation model, and determine a basic parameter of a battery stress structure. The expansion force of the battery cell changes when the battery is in operation. Therefore, after the battery cell is delivered from a factory, stress deformation may be detected based on the basic parameter of the battery stress structure, and the stress structure parameter may be periodically self-checked and adjusted. Therefore, the processor or a memory connected to the processor stores a battery stress structure parameter, and the battery stress structure parameter includes a preset stress magnitude and a preset stress change rate at one or more positions inside the battery cell 11 or on the explosion-proof valve 111. Directions and magnitudes of stress at different positions inside the battery cell 11 or on the explosion-proof valve 111 change inconsistently, which can be detected by using the stress sensor 116. The processor is configured to determine the faulty target battery cell 11 based on the one or more electrical signals and the battery stress structure parameter. For example, the processor obtains a detected stress magnitude at a position based on an electrical signal, compares the detected stress magnitude at the position with a preset stress magnitude at the position in a prestored battery stress structure parameter, and determines whether to perform a warning, and/or the processor obtains a detected stress change rate at a position based on an electrical signal, compares the detected stress change rate at the position with a preset stress change rate at the position in a prestored battery stress structure parameter, and determines whether to perform a warning.

The processor is further configured to control a fire extinguishing apparatus to perform a fire extinguishing operation on the target battery cell 11 when open fire information of the target battery cell 11 is detected. For example, the processor is connected to a flame detection device. The flame detection device includes a flame detection sensor, a drive motor, and a posture adjusting base. The flame detection sensor is disposed on the posture adjusting base. The flame detection sensor may be an infrared flame sensor, an ultraviolet flame sensor, a hybrid infrared and ultraviolet flame sensor, or the like. A monitoring angle of the flame detection sensor may be adjusted by the drive motor. For example, the monitoring angle of the flame detection sensor may be 30° to 180°, and the flame detection sensor is generally installed in a middle top position or another open top position that stores the battery pack. The processor is also connected to a fire extinguishing apparatus, and the fire extinguishing apparatus is used to perform fire extinguishing.

Before a faulty target battery cell is detected, a monitoring angle of the flame detection sensor may be periodically adjusted by using the drive motor, and flame monitoring may be performed on one or more battery modules 1. In this case, the flame detection sensor is set to a patrol state. In one cycle, the flame detection sensor sequentially performs the flame monitoring on the one or more battery modules 1. Time for each monitoring can be fixed. For example, if there are 10 battery modules 1 stored in space, and flame monitoring is performed on one or more battery modules 1 in the space every 10 minutes (that is, a monitoring period is 10 minutes), then the monitoring may be performed on each battery module 1 for 1 minute.

When the flame detection sensor is set to the patrol state, the fire extinguishing apparatus does not operate, which does not affect normal use of the space.

When a faulty target battery cell or a target battery module is detected, the processor controls the flame detection sensor to exit the patrol state, and controls the drive motor to adjust the monitoring angle of the flame detection sensor, so that the monitoring angle is consistent with a position of the target battery cell or the target battery module, even if the flame detection sensor is aligned with the target battery module for monitoring.

The flame detection sensor continuously performs flame monitoring on the target battery cell or the target battery module, and determines in real time whether a flame is detected.

When a fire is monitored on the target battery cell or the target battery module, the processor controls the fire extinguishing apparatus to start a fire extinguishing operation on the target battery cell or the target battery module, thereby improving accuracy of the fire extinguishing operation. For example, the fire extinguishing operation includes one or more of the following: fire extinguishing agent sprays fire extinguishing, water sprays fire extinguishing, water mist fire extinguishing, fine water mist fire extinguishing, and the like.

It can be learned that when the target battery cell is on fire due to thermal runaway, the processor may further control the fire extinguishing apparatus to extinguish the fire on the target battery cell in a timely manner to avoid damage to the entire battery module or the battery pack, thereby avoiding a greater loss.

The processor receives the foregoing one or more electrical signals, and may further perform a warning, to prompt that thermal runaway occurs on the battery cell 11, or the explosion-proof valve 111 is about to open, or the explosion-proof valve 111 is already opened.

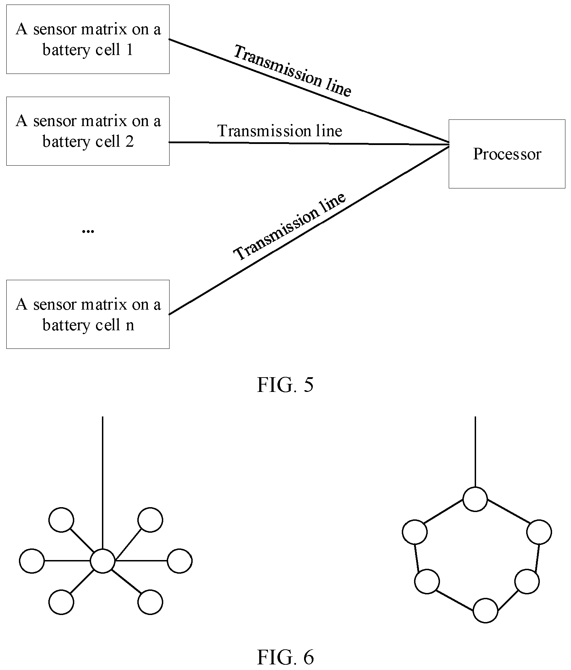

FIG. 5 is a schematic diagram of a structure of an electrical connection for performing stress monitoring on a plurality of battery cells in a battery module according to an embodiment of this application. The figure shows an example of n battery cells. Each battery cell includes a plurality of stress sensors. The plurality of stress sensors 116 are located at at least some element positions of the plurality of element positions distributed in a matrix on the explosion-proof valve 111, and form a sensor matrix 118 of the battery cell (as shown in FIG. 4). That is, the plurality of stress sensors 116 may be located at all element positions distributed in a matrix on the explosion-proof valve 111, or may be located at some element positions distributed in a matrix on the explosion-proof valve 111. The sensor matrix 118 of the n battery cells is connected to the processor through the transmission line.

For example, a numerical table of m rows and n columns arranged by m x n number aᵢⱼ is referred to as a matrix of m rows and n columns, an m x n matrix for short. The m x n numbers is referred to as an element of a matrix A, an element for short. The number aᵢⱼ is located in the i^{th} row and the j^{th} column of the matrix *A,* and is referred to as an (i, j) element of the matrix A.

For example, the stress sensor 116 may be directly corresponding to a position of one element, and the stress sensor 116 may alternatively be disposed in a position that is deviated from an element, for example, between two elements. The foregoing one or more stress sensors 116 may be connected by a conducting wire 117, and a conducting wire material may be one or more of copper, aluminum flat wire, overhead stranded wire, and various profiles.

FIG. 6 is a schematic diagram of a stress sensor matrix according to an embodiment of this application. As shown in the right figure of FIG. 6, the foregoing at least some element positions may be distributed in a centralized manner, a plurality of electrical signals generated by the plurality of stress sensors 116 are aggregated to a stress sensor 116 located at a central element position, and the plurality of electrical signals are processed by a stress sensor 116 receiving aggregated signals into one electrical signal and then transmitted to the processor. By using the sensor matrix in this layout form, the stress sensor located at the central element position aggregates electrical signals corresponding to the plurality of stress sensors and then transmits the electrical signals to the processor, so that a transmission line may be simplified.

As shown in the right figure of FIG. 6, the at least some element positions are distributed in a distributed manner, a plurality of electrical signals generated by the plurality of stress sensors 116 are aggregated to one of the stress sensors 116, and the plurality of electrical signals are transmitted to the processor by a stress sensor 116 receiving aggregated signals. By using the sensor matrix in this layout form, conducting wires that connect sensors may be saved, and stress deformation at one or more positions may be accurately detected.

The plurality of stress sensors are located at at least some element positions of the plurality of element positions distributed in a matrix on the explosion-proof valve, so that stress deformation at one or more element positions may be accurately detected. When the plurality of stress sensors are distributed in a matrix, the stress sensor at each element position may be mutually verified, thereby improving accuracy of detection. In addition, a stress sensor at a single element position may be prevented from being faulty and needing to be replaced. Even if a stress sensor at one or a few element positions is faulty, stress monitoring may still be performed on the entire stress sensor matrix.

The foregoing one or more stress sensors 116 may be made of at least one of the following materials: a resin base material and a film base material.

The foregoing one or more stress sensors 116 may be a micro-electro-mechanical system (micro-electro-mechanical system, MEMS).

For example, the foregoing one or more stress sensor 116 are fastened to the explosion-proof valve 111 in at least one of the following manners: bonding and welding. For example, the one or more stress sensors 116 may be integrated with the explosion-proof valve 111 by using hot-press adhesive, and an adhesive layer is made of one or more of a polyacrylate (polyacrylate, PA) coating adhesive, polyethylene (polyethylene, PE), polyurethane (polyurethane, PU), polyester (polyester, PES), ethylene-vinyl acetate copolymer (ethylene-vinyl acetate copolymer, EVA), low density polyethylene (low density polyethylene, LDPE), high density polyethylene (high density polyethylene, HDPE), or thermoplastic polyurethane (thermoplastic polyurethane, TPU). The main functions implemented are as follows: normal integration at 160°C, high strength and toughness between -30°C and 150°C, and easy to fall off at an environment of -40°C, thereby imperilment the function of easy disassembly and maintenance. Therefore, the stress sensor may be conveniently and reliably fastened to the explosion-proof valve by bonding the stress sensor to the explosion-proof valve by using, for example, the hot-press adhesive, or welding the stress sensor to the explosion-proof valve. The sensor is easy to disassemble and maintain, and has little impact on the performance of the electrode component in the battery cell.

The foregoing one or more stress sensors 116 may be coated by a protective film. A material of the stress sensor 116 may be at least one of the following: polypropylene (polypropylene, PP), PE, or a PP composite PE film.

For example, the one or more stress sensors 116 may be connected to or communicate with the processor of the battery module 1 by using a transmission line such as a controller area network (controller area network, CAN), 485, fast Ethernet (fast Ethernet, FE), an optical fiber, or the like.

For example, the one or more stress sensors 116 may be connected to the processor of the battery module 1 by a composite wire, to provide power supply and signal transmission functions. The conducting wire material is one or more of copper, aluminum flat wire, overhead stranded wire, and various profiles.

To improve reliability and service life of the transmission line, the transmission line may be coated. The one or more stress sensors are coated by the protective film, so that the stress sensors may be prevented from being damaged, contaminated, or the like.

In addition, to improve anti-magnetic performance and confidentiality of the transmission line, a specific design may be performed on the transmission line.

It can be learned that according to the battery cell provided in this embodiment of this application, the one or more stress sensors are disposed on the explosion-proof valve or the housing of the battery cell, so that the one or more stress sensors may monitor stress of the battery cell in operation in real time, thereby improving timeliness of stress monitoring. The monitoring does not require large-scale test equipment and the monitoring method is easy to use An embodiment of this application further provides a battery module. The battery module includes a BMS and a plurality of battery cells in the foregoing embodiment, and the plurality of battery cells are connected in series/parallel. An embodiment of this application further provides a battery pack. The battery pack includes a plurality of the foregoing battery modules, each of the plurality of battery modules includes a battery management system and the plurality of battery cells in the foregoing embodiments, and the plurality of battery cells are connected in series/parallel. An embodiment of this application further provides an energy storage system. The energy storage system includes a converter and the foregoing battery pack. The converter is connected to the battery pack, and is configured to convert a current input to the battery pack or a current output from the battery pack.

The energy storage system is usually applied to household energy storage, site energy, electric vehicle, home energy storage, base station energy storage, data center backup power energy storage, uninterruptible power supply (uninterruptible power supply, UPS), intelligent photovoltaic energy storage, energy storage power stations, or the like.

An embodiment of this application further provides an electric vehicle. The electric vehicle, which may also be referred to as a new energy vehicle, is a vehicle driven by electric energy. The electric vehicle includes a motor, wheels, and the foregoing energy storage system electrically connected to the motor.

The energy storage system is a large-capacity and high-power storage battery. The energy storage system may provide electric energy for the motor and/or another component of the electric vehicle. In some examples, the energy storage system may include one or more rechargeable lithium-ion or lead-acid batteries. In addition, the energy storage system may further use other battery materials and configurations, which are not limited herein. When the electric vehicle is driving, the energy storage system may supply power to the motor by using a motor control unit (motor control unit, MCU) in the battery management system. The motor converts the electric energy provided by the energy storage system into mechanical energy, to drive the wheels to rotate, thereby implementing driving of the electric vehicle.

The motor is also configured to brake the vehicle when the BMS sends an alarm signal.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment. It should be understood that in descriptions of this application, unless otherwise specified, "/" indicates an "or" relationship between associated objects. For example, A/B may indicate A or B, where A or B may be singular or plural. Moreover, in the descriptions of this application, unless otherwise specified, "a plurality of" means two or more than two. "At least one of the following items" or a similar expression thereof refers to any combination of these items, including a singular item or any combination of plural items. For example, at least one item (piece) of a, b, or c may indicate: a, b, c, a and b, a and c, b and c, or a, b, and c, where a, b, and c may be singular or plural. In addition, to clearly describe the technical solutions in embodiments of this application,, words such as "first" and "second" are used for distinguishing between same items or similar items that have basically same functions or purposes. A person skilled in the art may understand that the words such as "first" and "second" do not limit a quantity or an execution sequence, and the words such as "first" and "second" do not indicate a definite difference. In addition, in embodiments of this application, words such as "example" or "for example" are used to represent giving an example, an illustration, or a description. Any embodiment or design described by "example" or "for example" in embodiments of this application should not be construed as being more preferred or advantageous than another embodiment or design. Exactly, use of the words such as "example" or "for example" is intended to present a related concept in a specific manner for ease of understanding.

## Claims

1. A battery cell (11), comprising a housing (112), an electrode component (113) located in the housing (112), a top cover component (114) located on the housing (112), and an explosion-proof valve (111) located on the top cover component (114), wherein the battery cell (11) further comprises one or more stress sensors (116), the stress sensors (116) are located on the explosion-proof valve (111) and face outside the housing (112); or the stress sensors (116) are located on the explosion-proof valve (111) and face inside the housing (112), and the stress sensors (116) are connected to a processor of a battery module (1);
wherein a surface of the explosion-proof valve (111) is divided into a first area and a second area, wherein thickness of an edge of the first area is consistent with thickness of a body of the explosion-proof valve (111), and thickness of an edge of the second area is less than the thickness of the body of the explosion-proof valve (111); and
the stress sensor (116) is located on the second area;
each stress sensor (116) is configured to detect stress that is inside the battery cell (11) and that acts on a corresponding position on the explosion-proof valve (111), and the one or more stress sensors (116) are configured to transmit all obtained electrical signals to the processor;
an electrical signal corresponding to the stress sensor (116) comprises at least one piece of the following information: position information of the stress sensor (116) on the explosion-proof valve (111), a stress magnitude, at the corresponding position, that is detected by the stress sensor (116), and a stress change rate, at the corresponding position, that is detected by the stress sensor (116); and
the battery cell (11) comprises a plurality of stress sensors (116), and the plurality of stress sensors (116) are located at at least some element positions of a plurality of element positions distributed in a matrix on the explosion-proof valve (111).

2. The battery cell according to claim 1, wherein when the stress sensor (116) is located on the explosion-proof valve (111) and faces outside the housing (112), the explosion-proof valve (111) is covered with a protection component, and the stress sensor (116) is disposed between the explosion-proof valve (111) and the protection component, or the stress sensor (116) is disposed on an outer surface of the protection component.

3. The battery cell according to claim 1 or 2, wherein the at least some element positions are distributed in a centralized manner, a plurality of electrical signals generated by the plurality of stress sensors (116) are aggregated to a stress sensor (116) located at a central element position, and the plurality of electrical signals are processed by a stress sensor (116) receiving aggregated signals into one electrical signal and then transmitted to the processor.

4. The battery cell according to claim 1 or 2, wherein the at least some element positions are distributed in a distributed manner, a plurality of electrical signals generated by the plurality of stress sensors (116) are aggregated to one of the stress sensors (116), and the plurality of electrical signals are transmitted to the processor by a stress sensor (116) receiving aggregated signals.

5. The battery cell according to any one of claims 1 to 4, wherein the stress sensor (116) is coated by a protective film.

6. A battery module, wherein the battery module (1) comprises a battery management system and a plurality of battery cells (11) according to any one of claims 1 to 5, and the plurality of battery cells (11) are connected in series/parallel;
the battery management system is configured to receive an electrical signal detected by each of one or more stress sensors (116) in each of the plurality of battery cells (11); and
the battery management system is further configured to determine a faulty target battery cell (11) according to one or more electrical signals.

7. The battery module according to claim 6, wherein the battery management system is further configured to control a fire extinguishing apparatus to extinguish a fire on the target battery cell (11) when open fire information of the target battery cell (11) is detected.

8. The battery module according to claim 6 or 7, wherein each battery cell (11) comprises a plurality of stress sensors (116), and the battery management system is configured to receive a plurality of aggregated electrical signals sent by one of the plurality of stress sensors (116).

9. The battery module according to any one of claims 6 to 8, wherein the battery management system stores at least one piece of the following information: a preset stress magnitude and a preset stress change rate at one or more positions on the explosion-proof valve (111); and
the battery management system is configured to determine the faulty target battery cell (11) based on a stress magnitude detected by each stress sensor (116) and a preset stress magnitude at a corresponding position, and/or a stress change rate detected by each stress sensor (116) and a preset stress change rate at a corresponding position.

10. A battery pack, wherein the battery pack comprises a plurality of battery modules (1), each of the plurality of battery modules (1) comprises a battery management system and a plurality of battery cells (11) according to any one of claims 1 to 5, and the plurality of battery cells (11) are connected in series/parallel.

11. An energy storage system, comprising a converter and at least one battery pack according to claim 10, wherein the converter is connected to the battery pack, and is configured to convert a current input to the battery pack or a current output from the battery pack.

12. An electric vehicle, comprising a motor, wheels, and the energy storage system according to claim 11 that is electrically connected to the motor, wherein the energy storage system is configured to provide electric energy for the motor.

## Patentansprüche

1. Batteriezelle (11), die ein Gehäuse (112), eine im Gehäuse (112) angeordnete Elektrodenkomponente (113), eine auf dem Gehäuse (112) angeordnete obere Abdeckungskomponente (114) und ein auf der oberen Abdeckungskomponente (114) angeordnetes explosionssicheres Ventil (111) umfasst, wobei die Batteriezelle (11) ferner einen oder mehrere Spannungssensoren (116) umfasst, die Spannungssensoren (116) auf dem explosionssicheren Ventil (111) angeordnet sind und nach außen aus dem Gehäuse (112) weisen; oder die Spannungssensoren (116) am explosionssicheren Ventil (111) angeordnet sind und in das Gehäuse (112) weisen, und die Spannungssensoren (116) mit einem Prozessor eines Batteriemoduls (1) verbunden sind;
wobei eine Oberfläche des explosionssicheren Ventils (111) in einen ersten Bereich und einen zweiten Bereich unterteilt ist, wobei die Dicke einer Kante des ersten Bereichs mit der Dicke eines Körpers des explosionssicheren Ventils (111) übereinstimmt und die Dicke einer Kante des zweiten Bereichs geringer ist als die Dicke des Körpers des explosionssicheren Ventils (111); und
der Spannungssensor (116) auf dem zweiten Bereich angeordnet ist;
jeder Spannungssensor (116) konfiguriert ist, um Spannungen zu erfassen, die innerhalb der Batteriezelle (11) herrschen und auf eine entsprechende Position des explosionssicheren Ventils (111) wirken, und der eine oder die mehreren Spannungssensoren (116) konfiguriert sind, um alle erhaltenen elektrischen Signale an den Prozessor zu übertragen;
ein dem Spannungssensor (116) entsprechendes elektrisches Signal mindestens eine der folgenden Informationen umfasst: Positionsinformationen des Spannungssensors (116) am explosionssicheren Ventil (111), eine Spannungsgröße an der entsprechenden Position, die vom Spannungssensor (116) erfasst wird, und eine Spannungsänderungsrate an der entsprechenden Position, die vom Spannungssensor (116) erfasst wird; und
die Batteriezelle (11) eine Vielzahl von Spannungssensoren (116) umfasst, und die Vielzahl von Spannungssensoren (116) an mindestens einigen Elementpositionen einer Vielzahl von Elementpositione, die in einer Matrix auf dem explosionssicheren Ventil (111) verteilt sind, angeordnet ist.

2. Batteriezelle nach Anspruch 1, wobei, wenn der Spannungssensor (116) auf dem explosionssicheren Ventil (111) eingerichtet ist und nach außen aus dem Gehäuse (112) weist, das explosionssichere Ventil (111) mit einer Schutzkomponente abgedeckt ist und der Spannungssensor (116) zwischen dem explosionssicheren Ventil (111) und der Schutzkomponente eingerichtet ist, oder der Spannungssensor (116) auf einer Außenoberfläche der Schutzkomponente angeordnet ist.

3. Batteriezelle nach Anspruch 1 oder 2, wobei die mindestens einigen Elementpositionen auf zentrale Weise verteilt sind, eine Vielzahl von elektrischen Signalen, die von der Vielzahl von Spannungssensoren (116) generiert werden, zu einem Spannungssensor (116) aggregiert werden, der an einer zentralen Elementposition angeordnet ist, und die Vielzahl von elektrischen Signalen von einem Spannungssensor (116), der die aggregierten Signale empfängt, zu einem elektrischen Signal verarbeitet und dann an den Prozessor übertragen werden.

4. Batteriezelle nach Anspruch 1 oder 2, wobei die mindestens einigen Elementpositionen auf verteilte Weise verteilt sind, eine Vielzahl von elektrischen Signalen, die von der Vielzahl von Spannungssensoren (116) generiert werden, zu einem der Spannungssensoren (116) aggregiert werden, und die Vielzahl von elektrischen Signalen von einem Spannungssensor (116), der aggregierte Signale empfängt, an den Prozessor übertragen werden.

5. Batteriezelle nach einem der Ansprüche 1 bis 4, wobei der Spannungssensor (116) mit einer Schutzfolie überzogen ist.

6. Batteriemodul, wobei das Batteriemodul (1) ein Batterieverwaltungssystem und eine Vielzahl von Batteriezellen (11) nach einem der Ansprüche 1 bis 5 umfasst, und die Vielzahl von Batteriezellen (11) in Reihe/parallel verbunden sind;
das Batterieverwaltungssystem konfiguriert ist, um ein elektrisches Signal zu empfangen, das von jedem von einem oder mehreren Spannungssensoren (116) in jeder der Vielzahl von Batteriezellen (11) erfasst wird; und
das Batterieverwaltungssystem ferner konfiguriert ist, um eine fehlerhafte Zielbatteriezelle (11) gemäß einem oder mehreren elektrischen Signalen zu bestimmen.

7. Batteriemodul nach Anspruch 6, wobei das Batterieverwaltungssystem ferner konfiguriert ist, um eine Brandlöscheinrichtung zu steuern, um einen Brand auf der Zielbatteriezelle (11) zu löschen, wenn Informationen über einen offenen Brand der Zielbatteriezelle (11) erfasst werden.

8. Batteriemodul nach Anspruch 6 oder 7, wobei jede Batteriezelle (11) eine Vielzahl von Spannungssensoren (116) umfasst und das Batterieverwaltungssystem konfiguriert ist, um eine Vielzahl aggregierter elektrischer Signale, die von einem der Vielzahl von Spannungssensoren (116) gesendet werden, zu empfangen.

9. Batteriemodul nach einem der Ansprüche 6 bis 8, wobei das Batterieverwaltungssystem mindestens eine der folgenden Informationen speichert: eine voreingestellte Spannungsgröße und eine voreingestellte Spannungsänderungsrate an einer oder mehreren Positionen des explosionssicheren Ventils (111); und
das Batterieverwaltungssystem konfiguriert ist, um die fehlerhafte Zielbatteriezelle (11) basierend auf einer von jedem Spannungssensor (116) erfassten Spannungsgröße und einer voreingestellten Spannungsgröße an einer entsprechenden Position und/oder einer von jedem Spannungssensor (116) erfassten Spannungsänderungsrate und einer voreingestellten Spannungsänderungsrate an einer entsprechenden Position zu bestimmen.

10. Batteriesatz, wobei der Batteriesatz eine Vielzahl von Batteriemodulen (1) umfasst, jedes der Vielzahl von Batteriemodulen (1) ein Batterieverwaltungssystem und eine Vielzahl von Batteriezellen (11) nach einem der Ansprüche 1 bis 5 umfasst, und die Vielzahl von Batteriezellen (11) in Reihe/parallel verbunden sind.

11. Energiespeichersystem, das einen Wandler und mindestens einen Batteriesatz nach Anspruch 10 umfasst, wobei der Wandler mit dem Batteriesatz verbunden und konfiguriert ist, um einen Eingangsstrom zum Batteriesatz oder einen Ausgangsstrom vom Batteriesatz umzuwandeln.

12. Elektrofahrzeug, das einen Motor, Räder und das Energiespeichersystem nach Anspruch 11 umfasst, das elektrisch mit dem Motor verbunden ist, wobei das Energiespeichersystem konfiguriert ist, um elektrische Energie für den Motor bereitzustellen.

## Revendications

1. Élément de batterie (11), comprenant un boîtier (112), un composant formant électrode (113) situé dans le boîtier (112), un composant formant couvercle supérieur (114) situé sur le boîtier (112), et une soupape antidéflagrante (111) située sur le composant formant couvercle supérieur (114), dans lequel l'élément de batterie (11) comprend en outre un ou plusieurs capteurs de contrainte (116), les capteurs de contrainte (116) sont situés sur la soupape antidéflagrante (111) et sont orientés vers l'extérieur du boîtier (112) ; ou les capteurs de contrainte (116) sont situés sur la soupape antidéflagrante (111) et sont orientés vers l'intérieur du boîtier (112), et les capteurs de contrainte (116) sont connectés à un processeur d'un module de batterie (1) ;
dans lequel une surface de la soupape antidéflagrante (111) est divisée en une première zone et en une seconde zone, dans lequel une épaisseur d'un bord de la première zone correspond à une épaisseur d'un corps de la soupape antidéflagrante (111), et une épaisseur d'un bord de la seconde zone est inférieure à l'épaisseur du corps de la soupape antidéflagrante (111) ; et le capteur de contrainte (116) est situé sur la seconde zone ;
chaque capteur de contrainte (116) est configuré pour détecter une contrainte qui se trouve à l'intérieur de l'élément de batterie (11) et qui agit sur une position correspondante sur la soupape antidéflagrante (111), et le ou les capteurs de contrainte (116) sont configurés pour transmettre tous les signaux électriques obtenus au processeur ;
un signal électrique correspondant au capteur de contrainte (116) comprend au moins un élément parmi les informations suivantes : des informations de position du capteur de contrainte (116) sur la soupape antidéflagrante (111), une amplitude de contrainte, à la position correspondante, qui est détectée par le capteur de contrainte (116), et un taux de changement de contrainte, à la position correspondante, qui est détecté par le capteur de contrainte (116) ; et
l'élément de batterie (11) comprend une pluralité de capteurs de contrainte (116), et la pluralité de capteurs de contrainte (116) sont situés à au moins certaines positions d'élément d'une pluralité de positions d'élément réparties en un réseau sur la soupape antidéflagrante (111).

2. Élément de batterie selon la revendication 1, dans lequel, lorsque le capteur de contrainte (116) est situé sur la soupape antidéflagrante (111) et est orienté vers l'extérieur du boîtier (112), la soupape antidéflagrante (111) est recouverte d'un composant de protection, et le capteur de contrainte (116) est disposé entre la soupape antidéflagrante (111) et le composant de protection, ou le capteur de contrainte (116) est disposé sur une surface extérieure du composant de protection.

3. Élément de batterie selon la revendication 1 ou 2, dans lequel les au moins certaines positions d'élément sont distribuées de manière centralisée, une pluralité de signaux électriques générés par la pluralité de capteurs de contrainte (116) sont agrégés à un capteur de contrainte (116) situé à une position d'élément central, et la pluralité de signaux électriques sont traités par un capteur de contrainte (116) recevant des signaux agrégés en un seul signal électrique et ensuite transmis au processeur.

4. Élément de batterie selon la revendication 1 ou 2, dans lequel les au moins certaines positions d'élément sont distribuées de manière distribuée, une pluralité de signaux électriques générés par la pluralité de capteurs de contrainte (116) sont agrégés à l'un des capteurs de contrainte (116), et la pluralité de signaux électriques sont transmis au processeur par un capteur de contrainte (116) recevant des signaux agrégés.

5. Élément de batterie selon l'une quelconque des revendications 1 à 4, dans lequel le capteur de contrainte (116) est recouvert d'un film protecteur.

6. Module de batterie, dans lequel le module de batterie (1) comprend un système de gestion de batterie et une pluralité d'éléments de batterie (11) selon l'une quelconque des revendications 1 à 5, et la pluralité d'éléments de batterie (11) sont connectés en série/en parallèle ;
le système de gestion de batterie est configuré pour recevoir un signal électrique détecté par chacun parmi un ou plusieurs capteurs de contrainte (116) dans chacun parmi la pluralité d'éléments de batterie (11) ; et
le système de gestion de batterie est en outre configuré pour déterminer un élément de batterie cible (11) défectueux en fonction d'un ou de plusieurs signaux électriques.

7. Module de batterie selon la revendication 6, dans lequel le système de gestion de batterie est en outre configuré pour commander un appareil d'extinction d'incendie afin d'éteindre un incendie sur l'élément de batterie cible (11) lorsque des informations d'incendie en cours de l'élément de batterie cible (11) sont détectées.

8. Module de batterie selon la revendication 6 ou 7, dans lequel chaque élément de batterie (11) comprend une pluralité de capteurs de contrainte (116), et le système de gestion de batterie est configuré pour recevoir une pluralité de signaux électriques agrégés envoyés par l'un parmi la pluralité de capteurs de contrainte (116).

9. Module de batterie selon l'une quelconque des revendications 6 à 8, dans lequel le système de gestion de batterie stocke au moins un élément parmi les informations suivantes : une amplitude de contrainte prédéfinie et un taux de changement de contrainte prédéfini à une ou plusieurs positions sur la soupape antidéflagrante (111) ; et
le système de gestion de batterie est configuré pour déterminer l'élément de batterie cible (11) défectueux sur la base d'une amplitude de contrainte détectée par chaque capteur de contrainte (116) et d'une amplitude de contrainte prédéfinie à une position correspondante, et/ou d'un taux de changement de contrainte détecté par chaque capteur de contrainte (116) et d'un taux de changement de contrainte prédéfini à une position correspondante.

10. Bloc-batterie, dans lequel le bloc-batterie comprend une pluralité de modules de batterie (1), chacun parmi la pluralité de modules de batterie (1) comprend un système de gestion de batterie et une pluralité d'éléments de batterie (11) selon l'une quelconque des revendications 1 à 5, et la pluralité d'éléments de batterie (11) sont connectés en série/en parallèle.

11. Système de stockage d'énergie, comprenant un convertisseur et au moins un bloc-batterie selon la revendication 10, dans lequel le convertisseur est connecté au bloc-batterie, et est configuré pour convertir une entrée de courant dans le bloc-batterie ou une sortie de courant provenant du bloc-batterie.

12. Véhicule électrique, comprenant un moteur, des roues et le système de stockage d'énergie selon la revendication 11 qui est connecté électriquement au moteur, dans lequel le système de stockage d'énergie est configuré pour fournir de l'énergie électrique pour le moteur.
